# EUROPEAN PATENT SPECIFICATION

(11) **EP 3 951 732 B1**
(45) Date of publication and mention of the grant of the patent: **02.04.2025**
(21) Application number: 20776610.6
(22) Date of filing: 19.02.2020
(51) Int. Cl.: G08B 17/00, G08B 17/107, G08B 25/00, G08B 25/08, H04B 7/155

(54) **DETECTION SYSTEM, RELAY, PROCESSING METHOD, AND PROGRAM**
DETEKTIONSSYSTEM, RELAIS, VERARBEITUNGSVERFAHREN UND PROGRAMM
SYSTÈME DE DÉTECTION, RELAIS, PROCÉDÉ DE DÉTECTION, ET PROGRAMME

(30) Priority: 27.03.2019 JP 2019061920
(43) Date of publication of application: 09.02.2022
(73) Proprietor: Panasonic Intellectual Property Management Co., Ltd., Osaka-shi, Osaka 540-6207 (JP)
(72) Inventor: TAKAHASHI, Hideaki, Osaka-shi, Osaka 540-6207 (JP); CHINZAKA, Mai, Osaka-shi, Osaka 540-6207 (JP)
(74) Representative: Appelt, Christian W.
(86) International application number: PCT/JP2020/006601
(87) International publication number: WO 2020/195379

(56) References cited:
- EP-A2- 0 833 288
- WO-A1-2011/055705
- JP-A- 2011 059 997
- JP-A- 2013 008 194
- JP-A- 2013 235 554
- US-A1- 2017 257 826

## Description

### Technical Field

The present disclosure generally relates to detection systems, relays, processing methods and programs, and more particularly relates to a detection system to detect presence of an event that calls for disaster protection measures, a relay to be applied to the detection system, a processing method for the detection system, and a program.

### Background Art

Patent Literature 1 discloses an exemplary known alarm system. This alarm system transmits, when an alarm device in one group detects presence of a fire and outputs an alert, a fire interconnection signal to allow another alarm device in the one group to output an alert. Furthermore, the fire interconnection signal is received also at a relay. The relay designates another group to transmit an alarm preparation interconnection signal, and an alarm device in the other group accordingly performs an alarm preparation operation to issue an alarm. In this alarm system, two groups perform the interconnection via the relay. Each alarm device in the two groups communicates, using a communication frequency different for each group. The relay coverts a signal with a communication frequency, received from any group, into a signal with a communicate frequency to be used in the other group, and transmits the signal converted.

EP 833 288 A2 discloses a system including a message centre with associated danger notification sensors with a radio transceiver for the wireless danger-massage transmission to the message centre

US 2017/257826 discloses a wireless sensor unit system providing bi-directional communication between a sensor (e.g., smoke sensor, fire sensor, temperature sensor, water, etc.) and a repeater or base unit in a building protection system.

### Citation List

### Patent Literature

Patent Literature 1: JP 2017-188173 A

### Summary of Invention

In the alarm system (detection system) disclosed in Patent Literature 1, the relay needs to previously know a communication frequency to be used in each group (detection group) which is a communication destination. In other words, the user of the alarm system is required to set, to the relay, information about communication frequencies to be used in a plurality of groups. Such a setting may lead to further complicated work, depending on an increase in the number of the relays or the groups. Also, when an addition of a relay or an alarm device (detector) or an extension of a group is implemented after installation of the alarm system, such the setting may lead to the complicated work.

It is therefore an object of the present disclosure to provide a detection system, a relay, a processing method, and a program, which can realize improving workability relating to setting work for communications between a plurality of detection groups.

The invention is defined by independent claim 1.

A detection system according to an aspect of the present disclosure includes a plurality of detection groups, each of which including:at least one detector configured to detect presence of an event that calls for disaster protection measures and transmit a detection signal based on a detection result relating to the event; and a relay configured to relay the detection signal received from the detector, the plurality of detection groups being configured to transmit or receive the detection signal over the plurality of detection groups via a plurality of the relays, the plurality of the relays including a first relay and a second relay other than the first relay, wherein the first relay belongs to a first detection group and the second relay belongs to a second detection group being different from the first detection group, and wherein the first relay is configured to relay the detection signal to the second relay, when receiving the detection signal from the detector of the first detection group to which the first relay belongs, of the plurality of detection groups, wherein the second relay is configured to relay the detection signal to the first relay, when receiving the detection signal from the detector of the second detection group to which the second relay belongs, of the plurality of detection groups, wherein the detector and the relay in each of the plurality of detection groups are configured to communicate with each other by a corresponding frequency of frequencies, the frequencies being respectively adopted by the plurality of detection groups, and the frequencies being different from each other, and the plurality of the relays are configured to communicate with each other by a frequency different from any of the frequencies to be adopted by the plurality of detection groups.

A relay according to an aspect of the present disclosure is applied to any one of the detection systems described above. The relay is configured to switch the frequency to be adopted from a first frequency to a second frequency, and vice versa in accordance with whether a communication destination is the detector in a detection group, to which the relay belongs, of the plurality of detection groups, or the plurality of the relays. The first frequency is set for communications in the detection group. The second frequency is set for communications between the plurality of the relays.

A relay according to an aspect of the present disclosure is applied to any one of the detection systems described above. The relay includes a setting unit. The setting unit is configured to set a first frequency to be adopted for communications in a detection group, to which the relay belongs, of the plurality of detection groups and a second frequency to be adopted for communications between the plurality of the relays.

A processing method according to claim 5 of the present disclosure is a processing method for a detection system including a plurality of detection groups. Each of the plurality of detection groups includes at least one detector and a relay. The plurality of detection groups are configured to transmit or receive a detection signal over the plurality of detection groups via a plurality of the relays. The processing method includes a first step including detecting, with the detector, presence of an event that calls for disaster protection measures;a second step including transmitting, with the detector, the detection signal based on a detection result relating to the event; and a third step including relaying, with the relay, the detection signal received from the detector, wherein a first relay belongs to a first detection group and a second relay belongs to a second detection group being different from the first detection group, the third step including, when the first relay of the plurality of the relays receives the detection signal from the detector of the first detection group to which the first relay belongs, of the plurality of detection groups , relaying with the first relay the detection signal to the second relay other than the first relay, of the plurality of the relays, and when receiving the detection signal from the detector of the second detection group to which the second relay belongs, of the plurality of detection groups, relaying with the second relay the detection signal to the first relay, wherein the detector and the relay in each of the plurality of detection groups communicate with each other by a corresponding frequency of frequencies, the frequencies being respectively adopted by the plurality of detection groups, and the frequencies being different from each other, and the plurality of the relays communicates with each other by a frequency different from any of the frequencies to be adopted by the plurality of detection groups.

A program according to an aspect of the present disclosure is a computer program designed to cause a computer system to execute any one of the processing methods described above.

### Brief Description of Drawings

FIG 1 is a schematic drawing for explaining a detection system according to an exemplary embodiment;
FIG 2 is a schematic block diagram relating to the detection system;
FIG 3 is an explanatory drawing relating to an external server and an information terminal of the detection system;
FIG 4A is an explanatory drawing relating to a first operational example about how the detection system operates;
FIG 4B is an explanatory drawing relating to the first operational example about how the detection system operates; and
FIG 5 is an explanatory drawing relating to a second operational example about how the detection system operates.

### Description of Embodiments

### (1) Overview

The drawings to be referred to in the following description of an exemplary embodiment are all schematic representations. That is to say, the ratio of the dimensions including thicknesses, of respective constituent elements illustrated on the drawings does not always reflect their actual dimensional ratio.

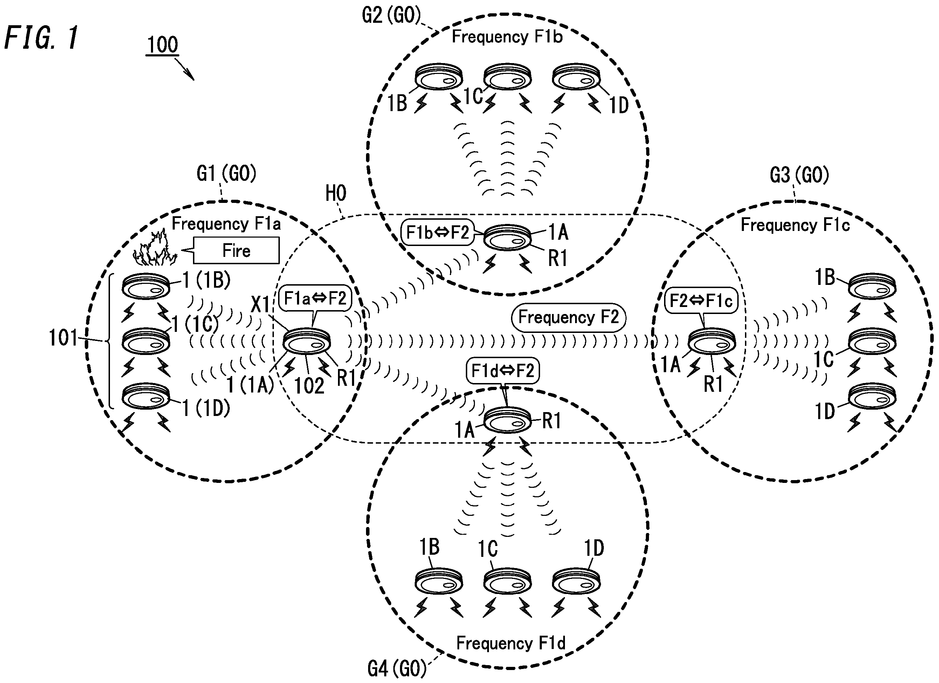

A detection system 100 (see FIG 1) according to an exemplary embodiment includes a plurality of detection groups G0. Each of the plurality of detection groups G0 includes at least one detector 1 (three detectors as one example in this embodiment) and a relay R1. The detector 1 is configured to detect presence of an event that calls for disaster protection measures and transmit a detection signal based on a detection result relating to the event. The relay R1 is configured to relay the detection signal received from the detector 1.

In this embodiment, the "event that calls for disaster protection measures" is a fire as one example, and each detector 1 is assumed to be a fire alarm. Accordingly, each detector 1 has both of a function of detecting the presence of a fire and a function of emitting an alarm sound in accordance with detection of the fire. In each detection group G0, the detectors 1 are interconnect-type fire alarms, each of which transmits or receives an interconnection signal (detection signal) for allowing the other detectors to emit the alarm sound in the interconnection. The interconnection signal (detection signal) is also transmitted or received over the plurality of detection groups G0 via the relays R1. Alternatively, the detectors 1 may be fire alarms having only the function of detecting the presence of a fire. The "event that calls for disaster protection measures" is not limited to a fire but may be floods, earthquakes, gas leakage, generation of carbon monoxide (CO) due to unburning, or the like.

Hereinafter, the relay R1 is also assumed to be one of the detectors 1. That is to say, one (e.g., a master device) of the plurality of detectors 1 in each detection group G0 is assumed to have a function as the relay R1. However, the relay R1 may be a device separate from the detector 1, as long as it has a function of relaying the detection signal received from any detector 1. That is to say, the function of detecting presence of the "event that calls for disaster protection measures (i.e., a fire)" is not an essential function for the relay R1. Accordingly, the relay R1 may be a communication device dedicated to relay.

The detection system 100 is applied to a facility, for example. More specifically, the plurality of detectors 1 are installed to a ceiling, a wall, or the like, provided in an installation target space in the facility. The facility is assumed to have a relatively large area. That is to say, the facility is assumed to have a target area relating to the fire detection, which is too large to be covered by a few detectors 1. Examples of the facility may include a multi-family dwelling house (condominium) (i.e., what is called a "mansion" in Japan), office buildings, theaters, movie theaters, public halls, amusement facilities, complex facilities, restaurants, department stores, schools, hotels, inns, hospitals, nursing homes for the elderly, kindergartens, libraries, museums, art museums, underground shopping malls, railway stations, and airports. In particular, the detection system 100 may be applied to the facility having a plurality of stories. For example, one detection group G0 may be assigned and installed to each story of the facility. The facility is not limited to having the plurality of stories, as long as it has a relatively large area. The facility may be a single-family dwelling house.

In one aspect according to the present disclosure, the plurality of detection groups G0 are configured to transmit or receive the detection signal over the plurality of detection groups G0 via a plurality of the relays R1. The plurality of the relays R1 include a first relay R11 and a second relay R12 other than the first relay R11. The first relay R11 is configured to relay the detection signal to the second relay R12, when receiving the detection signal from the detector 1 of a detection group G0 to which the first relay R11 belongs, of the plurality of detection groups G0.

That is to say, the first relay R11 does not directly transmit the detection signal to a detector 1 of the other detection group G0 different from the detection group G0 to which its own device belongs, but transmits it to the second relay R12 of the other detection group G0. Therefore, the user is not required to set, to the relay, information about communication frequencies to be used in a plurality of groups, unlike Patent Literature 1 described above. That is to say, in the one aspect, the first relay R11 is not involved in the setting information about communications in the other detection group G0 different from the detection group G0 to which its own device belongs. The one aspect can therefore realize improving workability relating to setting work for communications between the plurality of detection groups G0.

In the one aspect, all the communications in the detection system 100 are performed by wireless communication. However, the wireless communication is only an example and should not be construed as limiting. For example, at least one part of communications between the relays R1 in a relay group H0 may be performed by wire communication.

In another not claimed aspect, the plurality of detection groups G0 are configured to transmit or receive the detection signal over the plurality of detection groups G0 via a plurality of the relays R1. The plurality of the relays R1 include a first relay R11 and a second relay R12 other than the first relay R11. The first relay R11 is configured to transmit the detection signal to the detector 1 of a detection group G0 to which the first relay R11 belongs, of the plurality of detection groups G0, when receiving the detection signal from the second relay R12.

That is to say, the first relay R11 does not directly receive the detection signal from a detector 1 of the other detection group G0 different from the detection group G0 to which its own device belongs, but receives it from the second relay R12 of the other detection group G0. Therefore, the user is not required to set, to the relay, information about communication frequencies to be used in a plurality of groups, unlike Patent Literature 1 described above. That is to say, in the other aspect, the first relay R11 is not involved in the setting information about communications in the other detection group G0 different from the detection group G0 to which its own device belongs. Therefore, the other not claimed aspect can also realize improving workability relating to setting work for communications between the plurality of detection groups G0.

### (2) Details

### (2.1) Overall configuration

Hereinafter, the overall configuration of a detection system 100 according to this embodiment will be described in more detail. The detection system 100 includes a plurality of detection groups G0 (four in the example of FIG 1), as described above. Hereinafter, in order to distinguish the four detection groups G0 from one another, they are sometimes referred to as a first group G1, a second group G2, a third group G3, and a fourth group G4, respectively. As one example, each detection group G0 includes four detectors 1 in all, as illustrated in FIG 1. As described above, one of the four detectors 1 corresponds to a relay 1 and further functions as a master detector that manages the remaining three detectors 1 (slave detectors). In the example of FIG 1, all the detection groups G0 include the same number of the detectors 1. However, at least one of the detection groups G0 may include the different number of the detectors 1.

In this embodiment, the four detectors 1 in each detection group G0 include a detector 1A functioning as a master detector and three detectors 1B to 1D functioning as slave detectors (see FIG 1). In each detection group G0, the communications can be performed between the master detector and each of the slave detectors. Hereinafter, the three detectors 1B to 1D functioning as the slave detectors are sometimes referred to as slave devices 101. Also, the detector 1A functioning as the master detector is sometimes referred to as a master device 102.

The four relays R1 in the detection system 100 constitute a relay group H0 where the communications are mutually performed only between the four relays R1, as described above. Especially in this embodiment, a master device 102 belonging to the first group G1, of the four master devices 102 (corresponding to the four relays R1), is assumed to be a main master X1 that manages the remaining three master devices 102 in the relay group H0.

The detectors 1 are battery-powered fire alarms, as one example. However, the detectors 1 may be electrically connected to an external power supply (e.g., a commercial power grid), and may be driven by converting AC power (having an effective value of 100 V, for example) received from the external power supply into DC power.

The plurality of detectors 1 in each detection group G0 are so-called interconnect-type fire alarms. Each of the plurality of detectors 1 is configured to emit an alarm sound in the interconnection with the other detector(s) 1 (together with the other detector(s) 1) no matter which of the plurality of detectors 1 detects the presence of a fire. In this embodiment, a network is formed between the plurality of detectors 1 in each detection group G0 to make each detector 1 ready to communicate with the other detectors 1.

The four detection groups G0 are installed in the facility so as to cover four detection areas, into which the space in the facility is largely divided, respectively. The four detectors 1 of each detection group G0 are also installed so as to cover four small areas in a corresponding detection area, respectively. The four detection groups G0 transmit or receive signals (e.g., detection signals described later) over the four detection groups G0 via their four relays R1.

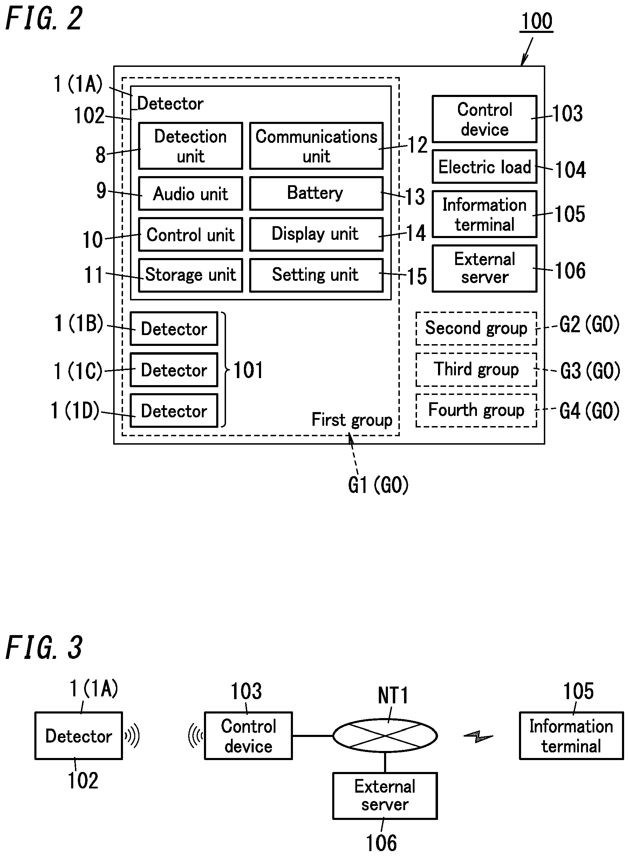

As illustrated in FIG 2, the detection system 100 further includes a control device 103, one or more electric loads 104, an information terminal 105 and an external server 106. The control device 103 is, for example, a controller of a Building Energy Management System (BEMS) installed in the facility. If the facility is a dwelling house, the control device 103 may be a controller of a Home Energy Management System (HEMS). The control device 103 is configured to manage the plurality of detectors 1 in the detection system 100. The control device 103 is further configured to manage the one or more electric loads 104 (more specifically, manage information about a using state, a power consumption and so on) other than the detectors 1.

Hereinafter, all communications in the detection system 100 are assumed to be performed by wireless communication. A radio frequency band to be used for communications in the four detection groups G0 and the relay group H0 corresponds to a radio frequency band in accordance with the regulations of the Fire Service Act in the country of Japan, for example. More specifically, the radio frequency band may correspond to the wireless station of the low-power security system, namely, the 426 MHz band.

For example, five of a plurality of frequency channels in the 426 MHz band are assigned to the four detection groups G0 and the relay group H0, respectively. In this embodiment, as one example, all the communication frequencies to be adopted in the four detection groups G0 and the relay group H0 are set to be different from one another. As illustrated in FIG 1, the communication frequencies (first frequencies) to be adopted in the first to fourth groups G1 to G4 are set to "F1a", "F1b", "F1c" and "F1d", respectively. The communication frequency (second frequency) to be adopted in the relay group H0 is set to "F2."

On the other hand, the four master devices 102 (or only the main master X1 representatively) are configured to communicate with the control device 103, using a radio wave of the 920 MHz of radio frequency band compliant with the Wi-SUN^{®} standard (which is an international wireless communication standard IEEE 802.15.4g). Each master device 102 transmits to the control device 103, a notification signal for notifying the outside of that a fire has occurred in the facility, using the radio wave of the 920 MHz band.

The frequency bands to be used in the detection system 100 do not have to be the 426 MHz band and the 920 MHz band described above but may also be changed as appropriate in accordance with applicable regulations of the Radio Act or Fire Service Act defined in any of various other countries.

### (2.2) Detector

### (2.2.1) Master device (Relay)

First, the configurations of the four master devices 102 (detectors 1A) of the plurality of detectors 1 in the detection system 100, namely the four relays R1 will be described.

Each master device 102 is configured to detect the presence of a fire. Each master device 102 has a detection function of detecting the presence of a fire in a corresponding small area of a prescribed detection area in the facility and an alarm function of outputting an alarm in accordance with the presence of the fire. As illustrated in FIG. 2, each master device 102 includes a detection unit 8, an audio unit 9, a control unit 10, a storage unit 11, a communications unit 12, a battery 13, a display unit 14, a setting unit 15 and a housing for housing or holding them. FIG. 2 representatively shows only the four detectors 1 in the first group G1 of the four detection groups G0.

In addition, each master device 102 further includes circuit modules such as an audio circuit and a lighting circuit. Each master device 102 further includes a circuit board where a plurality of electronic components constituting the communications unit 12, the audio circuit, the lighting device and so on are mounted. The battery 13 may be a lithium battery, for example. Each master device 102 is driven by the power supplied from the battery 13.

The control unit 10 includes a computer system including a processor and a memory, for example. The computer system performs the function of the control unit 10 by making the processor execute a program stored in the memory. In this embodiment, the program to be executed by the processor is stored in advance in the memory of the computer system. However, this is only an example and should not be construed as limiting. The program may also be distributed after having been stored in a non-transitory storage medium such as a memory card or downloaded via a telecommunications line such as the Internet.

The detection unit 8 has the capability of detecting information about a fire, against which an alarm sound needs to be emitted (i.e., has the detection function). In this embodiment, the detection unit 8 may be implemented as a photoelectric sensor for detecting smoke, for example. Therefore, the information about the fire includes information about smoke, for example. However, this is only an example of the present disclosure and should not be construed as limiting. Alternatively, the detection unit 8 does not have to be a photoelectric sensor but may also be a fixed temperature sensor for detecting heat, for example. The detection unit 8 includes a light-emitting unit such as a Light-Emitting Diode (LED) and a photodetector unit such as a photodiode, for example. The light-emitting unit and the photodetector unit are arranged in the labyrinth of the housing of its own device such that the photosensitive plane of the photodetector unit is off the optical axis of the light emitted from the light-emitting unit. In the presence of a fire, smoke may flow into the labyrinth through holes provided through the housing.

If there is no smoke in the labyrinth of the housing, then the light emitted from the light-emitting unit hardly reaches the photosensitive plane of the photodetector unit. On the other hand, if there is any smoke in the labyrinth of the housing, then the light emitted from the light-emitting unit is scattered by the smoke, thus causing some of the scattered light to impinge on the photosensitive plane of the photodetector unit. That is to say, the detection unit 8 makes the photodetector unit receive the light emitted from the light-emitting unit which has been scattered by the smoke. The detection unit 8 outputs an electrical signal (output signal), representing a voltage level corresponding to the quantity of light received at the photodetector unit, to the control unit 10.

The control unit 10 determines, based on the output signal provided by the detection unit 8, whether or not a fire is present. For example, when finding the voltage level of the output signal equal to or greater than a predetermined threshold value, the control unit 10 may decide that a fire should be present. When detecting the presence of a fire, the control unit 10 make the communications unit 12 transmit the detection signal based on a detection result relating to the fire. Also, when receiving the detection signal from the other detector 1, the control unit 10 may decide that a fire should be present.

The audio unit 9 and the display unit 14 constitute a notification unit having the capability of alerting a person to the presence of a fire, when the presence of the fire is detected in the facility.

The audio unit 9 emits a sound (i.e., an acoustic wave). When the control unit 10 decides that a fire should be present in the facility, the audio unit 9 emits an alarm sound to alert a person to the presence of the fire. The audio unit 9 may be implemented as a loudspeaker that transduces an electrical signal into a sound. The loudspeaker includes a diaphragm and emits an alarm sound by mechanically vibrating the diaphragm in accordance with the electrical signal. The audio unit 9 emits an alarm sound (such as a beep) under the control of the control unit 10. For example, the alarm sound may include a sweep sound that is swept from a low-frequency sound to a high-frequency sound and a voice warning message continuous with the sweep sound.

If the master device 102 of a certain detection group G0 detects the presence of a fire, the audio unit 9 of the master device 102 emits the voice warning message such as "Fire! Fire!" In this case, regarding an interconnection operation of emitting the alarm sound in the certain detection group G0, the master device 102 of the certain detection group G0 becomes an interconnection source of emitting the alarm sound (i.e., a source of the fire). The other detectors 1, which are interconnection destinations in the certain detection group G0, also emit the voice warning message such as "Fire in another room! Fire in another room!" The voice warning message may include name information representing a small area (installation place) where the detector 1 being the interconnection source is installed. As described later, since the master device 102 of the certain detection group G0 is one of the relays R1, the master device 102 transmits the detection signals, for example, at once by a broadcast method also to the three relays R1 of the other detection groups G0. In this embodiment, since the detectors 1 are the fire alarms as one example, the detection signals are transmitted in sequence to the other detectors 1 in order to allow them to perform the interconnection operation of emitting the alarm sound. Accordingly, hereinafter, the detection signal to be transmitted from any slave device 101 to a corresponding master device 102, from any master device 102 to a corresponding slave device 101 or from any relay R1 to the other relay R1 is sometimes referred to as an "interconnection signal."

When any detector 1 externally receives an operation input (push operation) via a push-button type of operation unit or the like during an alarm operation (i.e., during emission of the alarm sound), the audio unit 9 stops the emission of the alarm sound.

The display unit 14 may be implemented as an indicating lamp including a red LED as a light source. The display unit 14 is OFF normally (i.e., while monitoring for any fire) and starts flashing (or lighting) when the control unit 10 decides that a fire should be present. When the alarm sound stops being emitted, flashing is stopped under the control of the control unit 10.

The storage unit 11 is implemented as a device selected from the group consisting of a read-only memory (ROM), a random-access memory (RAM), an electrically erasable programmable read-only memory (EEPROM), and other storage devices. The storage unit 11 stores a unique identifier (identification information) assigned to itself (its own device). If a certain detector 1 manages the other detectors 1, the storage unit 11 of the certain detector 1 further stores a plurality of pieces of identification information assigned to the other detectors 1. The "identifier (identification information)" may be the IP address, the Mac address, or the name of the detector 1, for example. In addition, the storage unit 11 also stores alarm message data about the voice warning messages. Optionally, the storage unit 11 may be a memory of the control unit 10.

The storage unit 11 of each master device 102 in this embodiment stores a plurality of frequency channels corresponding to the 426 MHz band. In particular, the storage unit 11 of each master device 102 stores a channel (first frequency) to be adopted for the communications in the detection group G0 to which its own device belongs and a channel (second frequency F2) to be adopted for the communications in the relay group H0, of the plurality of frequency channels corresponding to the 426 MHz band.

The communications unit 12 is configured to perform wireless communication by two frequency bands of the 426 MHz band and the 920 MHz band. In other words, the communications unit 12 has a first communications interface capable of communicating by a radio wave of the 426 MHz band and a second communications interface capable of communicating by a radio wave of the 920 MHz band.

When the communications unit 12 communicates with the three slave devices 101 of the detection group G0 to which its own device belongs, the first communications interface thereof communicates using a channel of a corresponding first frequency of the four first frequencies F1a, F1b, F1c and F1d. That is to say, the slave devices 101 and the master device 102 (relay R1) in each detection group G0 are configured to communication with each other by a corresponding first frequency of the first frequencies. The first frequencies are respectively adopted by the plurality of detection groups G0. The first frequencies are different from each other.

For example, the master device 102 of the first group G1 communicates with the three slave devices 101 of the first group G1, using the first frequency F1a. The master device 102 of the second group G2 communicates with the three slave devices 101 of the second group G2, using the first frequency F1b. The master device 102 of the third group G3 communicates with the three slave devices 101 of the third group G3, using the first frequency F1c. The master device 102 of the fourth group G4 communicates with the three slave devices 101 of the fourth group G4, using the first frequency F1d.

Each master device 102 serves also as the relay R1. Accordingly, each master device 102, when the presence of a fire is detected by any slave device 101 of the detection group G0 to which its own device belongs, relays the interconnection signal (detection signal) received from the slave device 101 to the other detection groups G0. "Relaying" mentioned herein means relaying of the interconnection signal to the other detection groups G0. When the communications unit 12 communicates with the three relays R1 (master devices 102) other than its own device, of the relay group H0, the first communications interface thereof communicates using a channel of the second frequency F2. That is to say, each relay R1 transmits to or receives from the relays R1 other than its own device the interconnection signal by the second frequency F2 different from any of the first frequencies F1a to F1d to be adopted upon the communications for the interconnection signal in the four detection groups G0.

More specifically, each master device 102 as the relay R1 transmits the interconnection signal to the other slave devices 101 in the same detection group G0, using a corresponding first frequency, when receiving the interconnection signal from any slave device 101 as a source of a fire in the detection group G0 to which its own device belongs. Furthermore, each master device 102 also relays the interconnection signal to the other three relays R1, using the second frequency F2 to be adopted upon the communications among the plurality of the relays R1. That is to say, the relay destinations for the interconnection signal (detection signal) received by each master device 102 as the relay R1 from any slave device 101 (detector 1) in the detection group G0 to which its own device belongs are two or more relays R1 (three in this embodiment) other than its own device.

Each master device 102, also when its own device has detected the presence of a fire, transmits the interconnection signal to the slave devices 101 of the detection group G0 to which its own device belongs by a corresponding first frequency, and relays the interconnection signal by the second frequency F2.

In short, the communications unit 12 of each master device 102 as the relay R1 is configured to switch a (communication) frequency to adopted in accordance with whether the communication destinations are the slave devices 101 (detectors 1) in the detection group G0 to which its own device belongs or the plurality of relays R1. The communication frequency to be adopted is switched from the first frequency, which is set for communications in the detection group G0 to which its own device belongs, to the second frequency F2, which is set for communications between the plurality of the relays R1, and vice versa. The master device 102 of each detection group G0 alternately and periodically switches the communication frequency from the first frequency F1a to the second frequency F2 and vice versa, normally (i.e., while monitoring for any fire), namely in a state waiting for the signal from any detector 1.

Each master device 102, when receiving the interconnection signal from any of the other three relays R1, transmits the interconnection signal to the slave devices 101 (detectors 1) in the detection group G0 to which its own device belongs, by the first frequency (any of F1a to F1d) to be adopted for the communications in the detection group G0.

Examples of the signal to be transmitted or received in each detection group G0 and in the relay group H0 may include not only the interconnection signal but also a request signal for requesting various information, an acknowledgement (ACK) signal, a synchronizing signal, a test signal for executing an operational test in interconnection with the other detectors, and so on. In short, not only the interconnection signal when the presence of a fire is detected but also the above various signals may be transmitted or received, using the corresponding frequency described above.

Each master device 102, when the presence of a fire is detected in the facility, transmits the notification signal to the control device 103 via the second communications interface.

The setting unit 15 is configured to set the first frequency (any of F1a to F1d) to be adopted for communications in the detection group G0, to which its own device belongs, of the plurality of detection groups G0 and the second frequency F2 to be adopted for communications between the plurality of the relays R1. For example, the setting unit 15 may be held by the housing to be exposed from the housing, and configured by an operation unit (e.g., a plurality of DIP switches) of externally accepting an operation input. Alternatively, the setting unit 15 may be held by the housing to be exposed from the housing, and configured by a photodetector unit of receiving infrared light transmitted from an external remote controller. If the setting unit 15 is configured by the plurality of DIP switches for example, the control unit 10 allows the storage unit 11 to store the first frequency (any of F1a to F1d) and the second frequency F2 based on an ON or OFF state of the DIP switch. Providing the setting unit 15 can improve the workability relating to setting of the corresponding first frequency (any of F1a to F1d) and the second frequency F2 with respect to each master device 102.

### (2.2.2) Slave device

Next, the configurations of the three slave devices 101 (detectors 1B to 1D) of each detection group G0 will be described in brief. Hereinafter, components of the slave devices 101, which are the same as those of the master device 102 (relay R1), are assigned with the same reference signs as the master device 102, and explanations thereof will be omitted as appropriate.

Each slave device 101 has a detection function of detecting the presence of a fire in a corresponding small area of the prescribed detection area in the facility and an alarm function of outputting an alarm in accordance with the presence of the fire, like the master device 102.

Each slave device 101 includes a detection unit 8, an audio unit 9, a control unit 10, a storage unit 11, a communications unit 12, a battery 13, a display unit 14, a setting unit 15 and a housing for housing or holding them, like the master device 102. In addition, each slave device 101 further includes circuit modules such as an audio circuit and a lighting device, and a circuit board.

Each slave device 101 does not communicate with the control device 103 but communicates with only the master device 102 of the detection group G0 to which its own device belongs. Therefore, the second communications interface capable of communicating by a radio wave of the 920 MHz band is not an essential for the communications unit 12 of each slave device 101, and may be omitted as appropriate. Since each slave device 101 is not the relay R1, storing the second frequency F2 for the communications in the relay group H0 is not essential for the storage unit 11 of each slave device 101, and may be omitted as appropriate. Furthermore, a switch function of switching the communication frequency to be used in accordance with the communication destination is not essential for the communications unit 12 of each slave device 101, and may be omitted as appropriate.

Alternatively, the detectors 1 having the same configuration each may be configured to be set to either the slave device 101 or the master device 102 in accordance with a switching operation to the DIP switches or the like, provided for the housing. In this case, also the communications unit 12 of each slave device 101 may include the second communications interface or have the function of switching the communication frequency. However, even if having the second communications interface or the function of switching the communication frequency, the detector 1, which has been set to the slave device 101, may be maintained to be in a state of not using their functions.

Each slave device 101, when its own device has detected the presence of a fire, serves as the interconnection source, and transmits the interconnection signal to the master device 102 of the detection group G0 to which its own device belongs via the communications unit 12 to make the other detectors emit the alarm sound in interconnection. Furthermore, each slave device 101, when its own device has detected the presence of a fire, starts emitting the alarm sound from the audio unit 9 of its own device, and making the display unit 14 of its own device flash.

On the other hands, each slave device 101 starts emitting the alarm sound from the audio unit 9 of its own device, and making the display unit 14 of its own device flash, when receiving the interconnection signal from the master device 102 of the detection group G0 to which its own device belongs via the communications unit 12.

### (2.3) Control device

The control device 103 may be implemented as, for example, a controller of the BEMS as described above. The control device 103 is configured to communicate with each of a plurality of electric loads 104 (only one electric load is illustrated in the example of FIG 2), provided for the facility. The plurality of electric loads 104 may include, for example, an air conditioner, a lighting device, a water heater and so on, each of which has a communication function. In this embodiment, the control device 103 is further capable of communicating with the four master devices 102 (detectors 1A) provided for the facility. The control device 103 is also capable of communicating, via each master device 102, with the three slave devices 101 (detectors 1B to 1D) of the detection group G0 to which a corresponding master device 102 belongs.

The control device 103 includes a communications interface for communicating with each master device 102 or the like, using a radio wave of the 920 MHz band. The control device 103 further includes a communications interface for communicating with the information terminal 105 and the external server 106 via a network NT1 (see FIG 3) such as the Internet. The control device 103 may communicate with the information terminal 105 via another device such as the external server 106.

The information terminal 105 may be implemented as a smartphone or a tablet terminal, carried by the user of the facility. The "user" of the facility mentioned here may correspond to, for example, a caretaker or an owner of the facility if the facility is a non-residential facility, or a resident if the facility is a residential facility. In this embodiment, the information terminal 105 is assumed to be a smartphone. An exclusive application software for communicating with the control device 103 by wireless is installed in the information terminal 105.

The control device 103 stores in its memory the plurality of pieces of identification information respectively assigned to the plurality of detectors 1. The control device 103 may store in the memory the identification information of each detector 1, with which information about an installation place of a corresponding detector 1 is associated. The control device 103 further stores in the memory the information relating to the information terminal 105 (e.g., a phone number).

The control device 103 may include a thin type of display device (display unit) such as a liquid crystal display or an organic electroluminescence (EL) display. If the display unit of the control device 103 is a touch panel type display device, the display unit may also have a function as an operation unit of accepting an operation from the user.

The control device 103, when receiving the notification signal form any master device 102, allows the display unit to display the information that a fire is present. Optionally, the control device 103 may allow the display unit to display the information about the installation place of the detector 1 which is a source of the fire.

If the external server 106 is a server device to be managed by a security company or the like, the control device 103 may notify the external server 106 of the information that a fire is present based on the notification signal received. Optionally, the control device 103 may notify the information terminal 105 of the information that a fire is present based on the notification signal received.

### (2.4) Operation

Hereinafter, the operation about how the detection system 100 operates when the presence of a fire is detected will be described. As one example herein, the presence of a fire is assumed to be detected by a certain detector 1 of the first group G1 of the four detection groups G0.

### [First operational example]

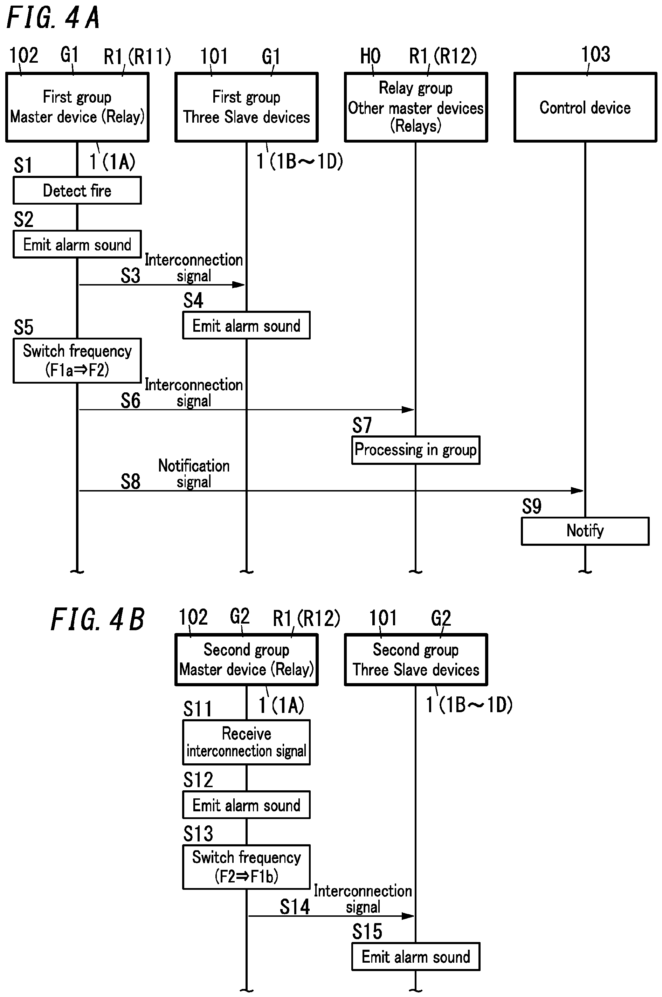

First, an operation when the presence of a fire has been detected by the master device 102 (detector 1A) of the first group G1 will be described with reference to FIG 4A. Hereinafter, the relay R1 (master device 102) of the first group G1 is sometimes referred to as a "first relay R11", and the other three relays R1 are sometimes referred to as "second relays R12", collectively.

The master device 102 of the first group G1 detects (the presence of) a fire in a corresponding small area of the prescribed detection area in the facility (in step S1). The master device 102 of the first group G1 emits the sweep sound and the voice warning message such as "Fire! Fire!" continuous with the sweep sound (i.e., starts emitting the alarm sound; in step S2). Furthermore, the master device 102 of the first group G1 transmits the interconnection signal (detection signal) to the three slave devices 101 of the first group G1, for example, sequentially by a multicast method (or a broadcast method), using a radio wave of the first frequency F1a (the 426 MHz band) (in step S3). As a result, each slave device 101 of the first group G1 starts emitting the alarm sound in interconnection with the master device 102 of the first group G1 emitting the alarm sound (in step S4).

The master device 102 of the first group G1 is the first relay R11 belonging to the relay group H0. The master device 102 of the first group G1 accordingly switches the communication frequency to be adopted from the first frequency F1a (the 426 MHz band) to the second frequency F2 (the 426 MHz band) which is a communication frequency for the relay group H0 (in step S5). The master device 102 of the first group G1 then transmits the interconnection signal to the three second relays R12, for example, at once by the broadcast method, using a radio wave with the second frequency F2 (in step S6). After receiving the interconnection signal, the three second relays R12 each perform a "processing in group" (in step S7). The "processing in group" will be described later.

The master device 102 of the first group G1 further transmits the notification signal to the control device 103, using a radio wave of the 920 MHz band (in step S8). The control device 103 allows the display unit to display the information that a fire should be present at the facility based on the notification signal received and notifies the information terminal 105, the external server 106 and so on of the information (in step S9).

Next, the "processing in group" (to be performed by the three second relays R12 received the interconnection signal from the master device 102 of the first group G1) will be described with reference to FIG 4B. Hereinafter, the "processing in group" will be described by focusing on only the second group G2, but the almost same processing may be performed also by the other groups (the third group G3 and the fourth group G4).

The master device 102 of the second group G2 is one of the second relays R12 belonging to the relay group H0. The master device 102 of the second group G2 receives the interconnection signal by a radio wave with the second frequency F2 from the master device 102 of the first group G1 (in step S11). As a result, the master device 102 of the second group G2 starts emitting the alarm sound in interconnection with emission of the alarm sound in the first group G1 (in step S12).

The master device 102 of the second group G2 switches the communication frequency to be adopted from the second frequency F2 to the first frequency F1b which is a communication frequency for the second group G2 (from F2 to F1c in the case of the third group G3, or from F2 to F1d in the case of the fourth group G4) (in step S13). The master device 102 of the second group G2 then transmits the interconnection signal to the three slave devices 101 of the second group G2, using a radio wave with the first frequency F1b (in step S14). As a result, each slave device 101 of the second group G2 starts emitting the alarm sound in interconnection with the master device 102 of the second group G2 emitting the alarm sound (in step S15).

### [Second operational example]

Next, an operation when the presence of a fire has been detected by any of the three slave devices 101 of the first group G1 will be described. As one example herein, the presence of a fire is assumed to be detected by the detector 1B of the first group G1.

The detector 1B of the first group G1 detects (the presence of) a fire in a corresponding small area of the prescribed detection area in the facility (in step S21). The detector 1B of the first group G1 emits the sweep sound and the voice warning message such as "Fire! Fire!" continuous with the sweep sound (i.e., starts emitting the alarm sound; in step S22). Furthermore, the detector 1B of the first group G1 transmits the interconnection signal to the master device 102 of the first group G1, using a radio wave with the first frequency F1a which is a communication frequency for the first group G1 (in step S23). As a result, the master device 102 of the first group G1 starts emitting the alarm sound in interconnection with the detector 1B of the first group G1 emitting the alarm sound (in step S24).

The master device 102 of the first group G1 further transmits the interconnection signal to the other slave devices 101 (detectors 1C and 1D) of the first group G1, for example, sequentially by the multicast method, using a radio wave with the first frequency F1a (in step S25). As a result, the other slave devices 101 of the first group G1 also starts emitting the alarm sound in interconnection (in step S26). Alternatively, the interconnection signal may be transmitted to not only the detectors 1C and 1D but also the detector 1B simultaneously by the broadcast method.

The master device 102 of the first group G1 is the first relay R11 belonging to the relay group H0. The master device 102 of the first group G1 accordingly switches the communication frequency to be adopted from the first frequency F1a to the second frequency F2 which is a communication frequency for the relay group H0 (in step S27). The master device 102 of the first group G1 then transmits the interconnection signal to the three second relays R12, for example, simultaneously by the broadcast method, using a radio wave with the second frequency F2 (in step S28). After receiving the interconnection signal, the three second relays R12 each perform the "processing in group" (in step S29). Because the "processing in group" in the step S29 is common to that of the above first operational example, explanations thereof will be omitted.

The master device 102 of the first group G1 further transmits the notification signal to the control device 103, using a radio wave of the 920 MHz band, like the above first operational example (in step S30). The control device 103 therefore allows the display unit to display the information that a fire should be present at the facility and notifies the information terminal 105, the external server 106 and so on of the information (in step S31).

The switching timing of the communication frequency in each of the above first and second operational examples is merely one example and should not be construed as limiting.

As described above, the plurality of relays R1 in the plurality of detection groups G0 according to this embodiment constitute the relay group H0 where the communication is mutually performed only between the plurality of relays R1. Accordingly, for example, the user do not need to set the plurality of pieces of information about the communication frequencies of the plurality of groups to the relay, unlike Patent Literature 1. That is to say, each relay R1 only needs to have the setting information about the communication for the detection group G0 to which its own device belongs and the setting information about the communication for the relay group H0. In other words, each relay R1 is not involved in the setting information about communications in the other detection groups G0 different from the detection group G0 to which its own device belongs. Thus, the setting worker upon the setting work for the communication do not need to register, to each relay R1, one by one all the plurality of pieces of setting information relating to the four detection groups G0. This configuration can therefore realize improving workability relating to the setting work for communications between the plurality of detection groups G0. In particular, the relay R1 do not also need to check information relating to the interconnection destination (the other detection group G0) included in the interconnection signal. Accordingly, the relay R1 only needs to transmit the interconnection signal to the other relays R1 belonging to the relay group H0. This configuration can therefore quickly transmit the interconnection signal to the other detection groups G0 to allow them to emit the alarm sound in interconnection.

Also in this embodiment, each of the plurality of relays R1 transmits the detection signal to the other relays R1 of the plurality of relays R1 or receives it from the other relays R1 by a communication frequency different from any of communication frequencies to be adopted for communications of the detection signals by the plurality of detection groups G0. Consequently, each relay R1 only needs to have the information about the communication frequency for the detection group G0 to which its own device belongs and the information about the communication frequency for the relay group H0. In other words, each relay R1 do not need to have the information about the communication frequencies in the other detection groups G0 different from the detection group G0 to which its own device belongs. Thus, the setting worker upon the setting work for the communication do not need to register, to each relay R1, one by one all the communication frequencies relating to the four detection groups G0. This configuration can therefore realize improving workability relating to the setting work for communications between the plurality of detection groups G0.

Furthermore in this embodiment, the detectors 1 and the relay R1 in each detection group G0 are configured to communication with each other by a corresponding first frequency of the first frequencies. The first frequencies are respectively adopted by the plurality of detection groups G0. The first frequencies are different from each other. This configuration can therefore realize improving workability relating to the setting work for communications between the plurality of detection groups G0, while securing stability of the communications in each detection group G0. Also the relay R1 switches the communication frequency to be adopted from the first frequency (any of F1a to F1d) to the second frequency F2, and vice versa in accordance with the communication destination, and this can contribute to more smoothly relaying of the interconnection signal (detection signal).

In particular the number of relays R1 according to this embodiment is three or more (four herein). This can therefore realize further improving workability relating to the setting work for communications between the plurality of detection groups G0 while extending the whole detection range of the detection system 100, compared with that the number of relays R1 is two.

### (2.5) Determination of success or failure in signal reception

After transmitting the interconnection signal (detection signal) to the other relays R1, the control unit 10 of each relay R1 is configured to determine whether or not the relay R1 which is a transmission destination succeeds in receiving the interconnection signal.

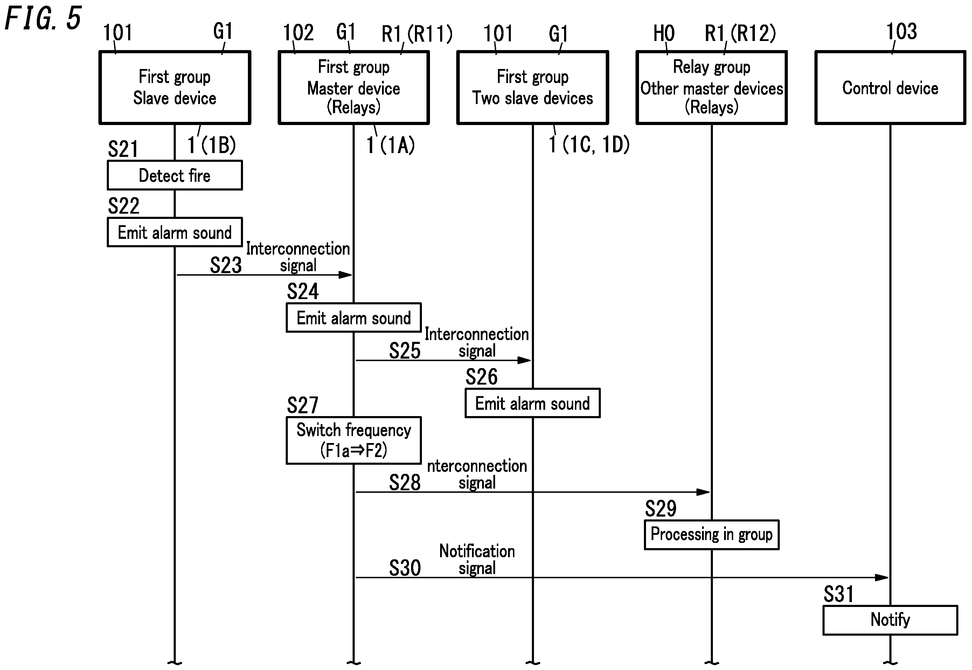

More specifically, for example, the master device 102 (first relay R11) of the first group G1 transmits the interconnection signal, where a request for the ACK signal is included, to the three second relays R12 in the step S6 of FIG 4A and the step S28 of FIG 5.

Each of the three second relays R12 returns the ACK signal including its own identification information to the first relay R11 in accordance with the above request, if normally received the interconnection signal from the first relay R11.

The control unit 10 of the first relay R11 determines, based on presence or absence of the ACK signal from each of the three second relays R12, whether or not a corresponding second relay R12 succeeds in receiving the interconnection signal. When finding a second relay R12 having not returned the ACK signal even after a prescribed time period has elapsed, the control unit 10 of the first relay R11 determines that the second relay R12 has failed in receiving the interconnection signal. When determining that the second relay R12 has failed in receiving the detection signal, the control unit 10 of the first relay R11 retransmits the interconnection signal to the second relay R12.

The first relay R11 stores in its own storage unit 11 the identification information of the three second relays R12. Accordingly, the first relay R11 can decide from which second relay R12 the ACK signal is not received. The interconnection signal may therefore be retransmitted by a unicast method that the identification information is specified, or again by the broadcast method that no identification information is specified. The number of times the first relay R11 retransmits the interconnection signal to the second relay R12 is preferably two or more times. The "number of times the first relay R11 retransmits the interconnection signal is two" means that, when fining a second relay R12 having not still returned the ACK signal even after the prescribed time period has again elapsed from a first retransmission of the interconnection signal, executing a second retransmission of the interconnection signal to the second relay R12 (that is to say, the number of times the first relay R11 transmits the interconnection signal is three in total).

As above, each relay R1 is configured to determine whether or not the relay R1 which is a transmission destination succeeds in receiving the interconnection signal, and this can contribute to improving of reliability in communications between the relays R1.

When finding a second relay R12 having not still returned the ACK signal despite the retransmission of the interconnection signal, the control unit 10 of the first relay R11 decides that a fault has occurred in the second relay R12. When finding out the second relay R12 being in fault occurrence, the control unit 10 of the first relay R11 may notify a person(s) around its own device of the fault information via the audio unit 9 and the display unit 14 of its own device, or may notify the control device 103 of the fault information.

If the notification about the fault occurrence is also performed in parallel while the alarm sound for informing the presence of a fire is emitted, it may cause confusion at the fire scene. Accordingly, the notification about the fault occurrence is preferably performed by only the main master X1 (the master device 102 of the first group G1 in this embodiment) managing the other three relays R1 in the relay group H0. Alternatively, for example, when a person around any detector 1 emitting the alarm sound knows that the alarm sound is false report, the one may operate the operation button of the detector 1 to stop the false alarm sound. In this case, the alarm sound is stopped in accordance with the operation, and then the notification about the fault occurrence may be performed after a while.

A timing of executing the above determination relating to success or failure in signal reception is a timing after the interconnection signal is transmitted, as the step S6 of FIG 4A and the step S28 of FIG 5. However, such the timing is only an example, and should not be construed as limiting. The above determination may be also executed after a test signal is transmitted from the first relay R11 to the second relay R12 in accordance with the first relay R11 accepting a test operation at a periodic inspection or the like of the detection system 100. The above determination may be also executed every after a synchronizing signal is periodically transmitted normally (i.e., while monitoring for any fire).

### (3) Variations

The exemplary embodiment described above is only an exemplary one of various embodiments of the present disclosure and should not be construed as limiting. The functions similar to the detection system 100 including the plurality of detection groups G0 may also be implemented as, for example, a processing method for the detection system 100, a computer program, or a non-transitory storage medium that stores the computer program.

Hereinafter, variations of the exemplary embodiment described above will be listed. The variations to be described below may be adopted in combination as appropriate. In the following description, the exemplary embodiment described above will be hereinafter sometimes referred to as a "basic example."

The detection system 100 according to the present disclosure includes a computer system. The computer system may include a processor and a memory as principal hardware components. The functions of the detection system 100 (e.g., the control unit 10) according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be implemented as a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very large-scale integrated circuit (VLSI), and an ultra-large scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, the plurality of functions of each detector 1 of the detection system 100 are integrated together in a single housing, but this is not an essential configuration for each detector 1. Alternatively, the plurality of functions of each detector 1 may be distributed in multiple different housings. Still alternatively, at least some functions of the detection system 100 (e.g., some functions) may be implemented as a cloud computing system as well. Conversely, the plurality of functions of each detector 1 may be integrated together in a single housing, as the basic example.

### (3.1) First Variation

As described in the above section of "(1) Overview," the relay R1 does not need to be one of the detectors 1, as long as it has a function of relaying the detection signal received from any detector 1. The relay R1 may be a relay exclusive communications device, provided separately from the detectors 1. Hereinafter, a detection system 100 (first variation) including a plurality of relays R1 separately from the detectors 1 (master devices 102) will be described.

The detection system 100 according to the first variation includes, for example, four detection groups G0, like the basic example. Each detection group G0 includes, for example, four detectors 1 (1A to 1D) and one relay R1. Also, the detector 1A corresponds to a master device 102, and the detectors 1B to 1D correspond to slave devices 101, like the basic example. The plurality of relays R1 constitute a relay group H0 where the communications are mutually performed only between the plurality of relays R1.

Each relay R1 of the first variation includes a storage unit which stores a plurality of frequency channels corresponding to the 426 MHz band. The storage unit of each relay R1 further stores: a channel (first frequency) to be adopted for communications in the detection group G0, to which its own device belongs, of the plurality of frequency channels corresponding to the 426 MHz band; and a channel (second frequency F2) to be adopted for communications in the relay group H0. The storage unit of each relay R1 further stores identification information of the detectors 1 (in particular, the master device 102) of the detection group G0, to which its own device belongs.

On the other hand, each master device 102 of the first variation is not a relay. A storage unit 11 of each master device 102 accordingly stores the channel (first frequency) to be adopted for communications in the detection group G0, to which its own device belongs, but does not store the channel (second frequency F2) to be adopted for communications in the relay group H0. Note that, the storage unit 11 of each master device 102 stores identification information of the slave devices 101 and the relay R1 of the detection group G0, to which its own device belongs.

Hereinafter, an operational example of the first variation, for example when the detector 1B of the first group G1 has detected the presence of a fire, will be described in brief.

The detector 1B of the first group G1, when detecting the presence of a fire, starts emitting the alarm sound. Furthermore, the detector 1B of the first group G1 transmits the interconnection signal to the master device 102 of the first group G1, using a radio wave with the first frequency F1a which is a communication frequency set for the first group G1. As a result, the master device 102 of the first group G1 starts emitting the alarm sound in interconnection with the detector 1B of the first group G1 emitting the alarm sound. Also, the master device 102 of the first group G1 transmits the interconnection signal to the other slave device 101 (i.e., the detectors 1C and 1D) of the first group G1, for example, sequentially by the multicast method using a radio wave with the first frequency F1a. Therefore, the other slave devices 101 of the first group G1 also start emitting the alarm sound in the interconnection.

Furthermore, the master device 102 of the first group G1 transmits the interconnection signal to the relay R1 (i.e., a communications device) of the first group G1, using a radio wave with the first frequency F1a. The relay R1 of the first group G1 switches the communication frequency to be adopted from the first frequency F1a to the second frequency F2 which is a communication frequency set for the relay group H0. The relay R1 of the first group G1 then transmits the interconnection signal to the other three relays R1, for example simultaneously by the broadcast method, using a radio wave with the second frequency F2.

The three relays R1, received the interconnection signal, each switch the communication frequency to be adopted from the second frequency F2 to a corresponding first frequency set for the detection group G0, to which its own device belongs. Each of the three relays R1 then transmits the interconnection signal to the master device 102 of the detection group G0, to which its own device belongs, using the corresponding first frequency. Each of those master devices 102 transmits the interconnection signal to the slave devices 101 of the detection group G0, to which its own device belongs, using the corresponding first frequency.

The notification signal may be transmitted to the control device 103, using a radio wave of the 920 MHz, by the master device 102 of the first group G1 or the relay R1 of the first group G1.

The configuration of the first variation can also realize improving workability relating to the setting work for communications between the plurality of detection groups G0.

### (3.2) Other Variations

In the basic example, the number of the detection groups G0 is four and the number of the relays R1 is also four. However, the numbers are only examples and should not be construed as limiting. The numbers may be two, three, five or more. If each of the numbers of the detection groups G0 and the relays R1 is three or more, it can realize further improving workability relating to the setting work for communications between the plurality of detection groups G0 while extending the whole detection range of the detection system 100, compared with that each of the numbers is two. That is to say, for example, the plurality of detection groups G0 preferably include at least three detection groups G0, and the plurality of relays R1 preferably include at least one first relay R11 and at least two second relays R12.

In the basic example, the number of relays R1 of each detection group G0 is one. However, the number is only an example and should not be construed as limiting. The number of relays R1 of each detection group G0 may be two or more. In other words, the number of detection groups G0 may be different from the number of relays R1.

### Reference Signs List

- 100: Detection System
- 1: Detector
- 15: Setting Unit
- R1: Relay
- R11: First Relay
- R12: Second Relay
- G0: Detection Group

## Claims

1. A detection system (100) comprising a plurality of detection groups (G0), each of which including:
at least one detector (1) configured to detect presence of an event that calls for disaster protection measures and transmit a detection signal based on a detection result relating to the event; and
a relay (R1) configured to relay the detection signal received from the at least one detector (1),
the plurality of detection groups (G0) being configured to transmit or receive the detection signal over the plurality of detection groups (G0) via a plurality of the relays (R1),
the plurality of the relays (R1) including a first relay (R11) and a second relay (R12) other than the first relay (R11), wherein the first relay (R11) belongs to a first detection group (G1) and the second relay (R12) belongs to a second detection group (G2) being different from the first detection group (G1), and
wherein the first relay (R11) is configured to relay the detection signal to the second relay (R12), when receiving the detection signal from the detector (1) of the first detection group (G1) to which the first relay (R11) belongs, of the plurality of detection groups (G0),
wherein the second relay (R12) is configured to relay the detection signal to the first relay (R11), when receiving the detection signal from the detector (1) of the second detection group (G2) to which the second relay (R12) belongs, of the plurality of detection groups (G0),
wherein the detector (1) and the relay (R1) in each of the plurality of detection groups (G0) are configured to communicate with each other by a corresponding frequency of frequencies, the frequencies being respectively adopted by the plurality of detection groups (G0), and the frequencies being different from each other, and
the plurality of the relays (R1) are configured to communicate with each other by a frequency different from any of the frequencies to be adopted by the plurality of detection groups (G0).

2. The detection system (100) of claim 1, wherein
the plurality of detection groups (G0) include at least three detection groups (G0), and
the plurality of the relays (R1) include at least one first relay (R11) as the first relay (R11), and at least two second relays as the second relay (R12).

3. The detection system (100) of any one of claims 1 to 2,
wherein the relay (R1) included in each of the detection groups is further configured to switch the frequency to be adopted from a first frequency to a second frequency, and vice versa in accordance with whether a communication destination is the detector (1) in a detection group (G0), to which the relay (R1) belongs, of the plurality of detection groups (G0), or the plurality of the relays (R1),
the first frequency being set for communications in the detection group (G0), and the second frequency being set for communications between the plurality of the relays (R1).

4. The detection system (100) of any one of claims 1 to 2, wherein the relay (R1) included in each of the detection groups is further comprising a setting unit (15) configured to set a first frequency to be adopted for communications in a detection group (G0), to which the relay (R1) belongs, of the plurality of detection groups (G0) and a second frequency to be adopted for communications between the plurality of the relays (R1).

5. A processing method for a detection system (100) as claimed in claims 1-4 ), the processing method comprising:
a first step including detecting, with the detector (1), presence of an event that calls for disaster protection measures;
a second step including transmitting, with the detector (1), the detection signal based on a detection result relating to the event; and
a third step including relaying, with the relay (R1), the detection signal received from the detector (1), wherein a first relay (R11) belongs to a first detection group (G1) and a second relay (R12) belongs to a second detection group (G2) being different from the first detection group (G1),
the third step including, when the first relay (R11) of the plurality of the relays (R1) receives the detection signal from the detector (1) of the first detection group (G1) to which the first relay (R11) belongs, of the plurality of detection groups (G0), relaying with the first relay (R11) the detection signal to the second relay (R12) other than the first relay (R11), of the plurality of the relays (R1), and when receiving the detection signal from the detector (1) of the second detection group (G2) to which the second relay (R12) belongs, of the plurality of detection groups (G0), relaying with the second relay (R12) the detection signal to the first relay (R11),
wherein the detector (1) and the relay (R1) in each of the plurality of detection groups (G0) communicate with each other by a corresponding frequency of frequencies, the frequencies being respectively adopted by the plurality of detection groups (G0), and the frequencies being different from each other, and
the plurality of the relays (R1) communicates with each other by a frequency different from any of the frequencies to be adopted by the plurality of detection groups (G0).

6. A program comprising instructions to cause the detection system of claim 1 to execute the steps of the method of claim 5.

## Patentansprüche

1. Detektionssystem (100), das mehrere Detektionsgruppen (G0) aufweist, von denen jede enthält:
mindestens einen Detektor (1), der konfiguriert ist, um ein Vorhandensein eines Ereignisses zu detektieren, das Katastrophenschutzmaßnahmen erfordert, und auf der Grundlage eines Detektionsergebnisses in Bezug auf das Ereignis ein Detektionssignal zu senden; und
ein Relais (R1), das konfiguriert ist, um das Detektionssignal, das von dem mindestens einen Detektor (1) empfangen wird, weiterzuleiten,
wobei die mehreren Detektionsgruppen (G0) konfiguriert sind, um das Detektionssignal über die mehreren Detektionsgruppen (G0) über mehrere Relais (R1) zu senden oder zu empfangen,
wobei die mehreren Relais (R1) ein erstes Relais (R11) und ein zweites Relais (R12), das sich vom ersten Relais (R11) unterscheidet, umfassen, wobei das erste Relais (R11) zu einer ersten Detektionsgruppe (G1) gehört und das zweite Relais (R12) zu einer zweiten Detektionsgruppe (G2) gehört, die sich von der ersten Detektionsgruppe (G1) unterscheidet, und
wobei das erste Relais (R11) konfiguriert ist, um das Detektionssignal an das zweite Relais (R12) weiterzuleiten, wenn es das Detektionssignal von dem Detektor (1) der ersten Detektionsgruppe (G1) aus den mehreren Detektionsgruppen (G0), zu der das erste Relais (R11) gehört, empfängt,
wobei das zweite Relais (R12) konfiguriert ist, um das Detektionssignal an das erste Relais (R11) weiterzuleiten, wenn es das Detektionssignal von dem Detektor (1) der zweiten Detektionsgruppe (G2) aus den mehreren Detektionsgruppen (G0), zu der das zweite Relais (R12) gehört, empfängt,
wobei der Detektor (1) und das Relais (R1) in jeder der mehreren Detektionsgruppen (G0) konfiguriert sind, um über eine entsprechende Frequenz von Frequenzen miteinander zu kommunizieren, wobei die Frequenzen jeweils von den mehreren Detektionsgruppen (G0) übernommen werden und die Frequenzen sich voneinander unterscheiden und
die mehreren Relais (R1) konfiguriert sind, um über eine Frequenz miteinander zu kommunizieren, die sich von jeder der Frequenzen, die von den mehreren Detektionsgruppen (G0) zu übernehmen sind, unterscheidet.

2. Detektionssystem (100) nach Anspruch 1, wobei
die mehreren Detektionsgruppen (G0) mindestens drei Detektionsgruppen (G0) umfassen und
die mehreren Relais (R1) mindestens ein erstes Relais (R11) als das erste Relais (R11) und mindestens zwei zweite Relais als das zweite Relais (R12) umfassen.

3. Detektionssystem (100) nach einem der Ansprüche 1 bis 2,
wobei das Relais (R1), das in jeder der Detektionsgruppen enthalten ist, ferner konfiguriert ist, um die zu übernehmende Frequenz von einer ersten Frequenz auf eine zweite Frequenz und umgekehrt umzuschalten, in Übereinstimmung damit, ob ein Kommunikationsziel der Detektor (1) in einer Detektionsgruppe (G0) aus den mehreren Detektionsgruppen (G0), zu der das Relais (R1) gehört, oder die mehreren Relais (R1) ist,
wobei die erste Frequenz für Kommunikationen in der Detektionsgruppe (G0) eingestellt ist und die zweite Frequenz für Kommunikationen zwischen den mehreren Relais (R1) eingestellt ist.

4. Detektionssystem (100) nach einem der Ansprüche 1 bis 2, wobei das Relais (R1), das in jeder der Detektionsgruppen enthalten ist, ferner eine Einstelleinheit (15) aufweist, die konfiguriert ist, um eine erste Frequenz, die für Kommunikationen in einer Detektionsgruppe (G0) aus den mehreren Detektionsgruppen (G0), zu der das Relais (R1) gehört, zu übernehmen ist, und eine zweite Frequenz, die für Kommunikationen zwischen den mehreren Relais (R1) zu übernehmen ist, einzustellen.

5. Verarbeitungsverfahren für ein Detektionssystem (100) nach den Ansprüchen 1 bis 4, wobei das Verarbeitungsverfahren umfasst:
einen ersten Schritt, der ein Detektieren des Vorhandensein eines Ereignisses, das Katastrophenschutzmaßnahmen erfordert, mit dem Detektor (1) umfasst;
einen zweiten Schritt, der ein Senden des Detektionssignals mit dem Detektor (1) auf der Grundlage eines Detektionsergebnisses in Bezug auf das Ereignis umfasst; und
einen dritten Schritt, der ein Weiterleiten des von dem Detektor (1) empfangenen Detektionssignals mit dem Relais (R1) umfasst, wobei ein erstes Relais (R11) zu einer ersten Detektionsgruppe (G1) gehört und ein zweites Relais (R12) zu einer zweiten Detektionsgruppe (G2) gehört, die sich von der ersten Detektionsgruppe (G1) unterscheidet,
wobei der dritte Schritt umfasst, wenn das erste Relais (R11) der mehreren Relais (R1) das Detektionssignal von dem Detektor (1) der ersten Detektionsgruppe (G1), zu der das erste Relais (R11) aus den mehreren Detektionsgruppen (G0) gehört, empfängt, ein Weiterleiten des Detektionssignals mit dem ersten Relais (R11) an das zweite Relais (R12) aus den mehreren Relais (R1), das sich von dem ersten Relais (R11) unterscheidet, und wenn es das Detektionssignal von dem Detektor (1) der zweiten Detektionsgruppe (G2) aus den mehreren Detektionsgruppen (G0), zu der das zweite Relais (R12) gehört, empfängt, ein Weiterleiten des Detektionssignals mit dem zweiten Relais (R12) an das erste Relais (R11),
wobei der Detektor (1) und das Relais (R1) in jeder der mehreren Detektionsgruppen (G0) über eine entsprechende Frequenz von Frequenzen miteinander kommunizieren, wobei die Frequenzen jeweils von den mehreren Detektionsgruppen (G0) übernommen werden und die Frequenzen sich voneinander unterscheiden, und
die mehreren Relais (R1) über eine Frequenz miteinander kommunizieren, die sich von jeder der Frequenzen, die von den mehreren Detektionsgruppen (G0) zu übernehmen sind, unterscheidet.

6. Programm, Anweisungen aufweisend, um das Detektionssystem nach Anspruch 1 dazu zu veranlassen, die Schritte des Verfahrens nach Anspruch 5 auszuführen.

## Revendications

1. Système de détection (100) comprenant une pluralité de groupes de détection (G0) incluant chacun :
au moins un détecteur (1) configuré de manière à détecter la présence d'un événement nécessitant des mesures de protection contre les sinistres et à transmettre un signal de détection sur la base d'un résultat de détection relatif à l'événement ; et
un relais (R1) configuré de manière à relayer le signal de détection reçu en provenance dudit au moins un détecteur (1) ;
la pluralité de groupes de détection (G0) étant configurée de manière à transmettre ou recevoir le signal de détection sur la pluralité de groupes de détection (G0) par l'intermédiaire d'une pluralité des relais (R1),
la pluralité des relais (R1) incluant un premier relais (R11) et un deuxième relais (R12) distinct du premier relais (R11), dans lequel le premier relais (R11) appartient à un premier groupe de détection (G1) et le deuxième relais (R12) appartient à un deuxième groupe de détection (G2) différent du premier groupe de détection (G1) ; et
dans lequel le premier relais (R11) est configuré de manière à relayer le signal de détection au deuxième relais (R12), lors de la réception du signal de détection en provenance du détecteur (1) du premier groupe de détection (G1) auquel appartient le premier relais (R11), parmi la pluralité de groupes de détection (G0) ;
le deuxième relais (R12) est configuré de manière à relayer le signal de détection au premier relais (R11), lors de la réception du signal de détection en provenance du détecteur (1) du deuxième groupe de détection (G2) auquel appartient le deuxième relais (R12), parmi la pluralité de groupes de détection (G0) ;
dans lequel le détecteur (1) et le relais (R1) dans chaque groupe de la pluralité de groupes de détection (G0) sont configurés de manière à communiquer l'un avec l'autre par le biais d'une fréquence correspondante parmi des fréquences, les fréquences étant respectivement adoptées par la pluralité de groupes de détection (G0), et les fréquences étant mutuellement différentes ; et
les relais de la pluralité des relais (R1) étant configurés de manière à communiquer entre eux par le biais d'une fréquence différente de l'une quelconque des fréquences devant être adoptées par la pluralité de groupes de détection (G0).

2. Système de détection (100) selon la revendication 1, dans lequel
la pluralité de groupes de détection (G0) inclut au moins trois groupes de détection (G0) ; et
la pluralité des relais (R1) inclut au moins un premier relais (R11) en tant que le premier relais (R11), et au moins deux deuxièmes relais en tant que le deuxième relais (R12).

3. Système de détection (100) selon l'une quelconque des revendications 1 à 2,
dans lequel le relais (R1) inclus dans chacun des groupes de détection est en outre configuré de manière à commuter la fréquence à adopter, d'une première fréquence à une deuxième fréquence, et vice versa, selon qu'une destination de communication est le détecteur (1) dans un groupe de détection (G0), auquel le relais (R1) appartient, parmi la pluralité de groupes de détection (G0), ou de la pluralité de relais (R1) ;
la première fréquence étant définie pour des communications dans le groupe de détection (G0), et la deuxième fréquence étant définie pour des communications entre les relais de la pluralité des relais (R1).

4. Système de détection (100) selon l'une quelconque des revendications 1 à 2, dans lequel le relais (R1) inclus dans chacun des groupes de détection comprend en outre une unité de définition (15) configurée de manière à définir une première fréquence à adopter pour des communications dans un groupe de détection (G0), auquel le relais (R1) appartient, parmi la pluralité de groupes de détection (G0), et une deuxième fréquence à adopter pour des communications entre les relais de la pluralité des relais (R1).

5. Procédé de traitement pour un système de détection (100) selon les revendications 1 à 4, le procédé de traitement comprenant :
une première étape incluant le fait de détecter, au moyen du détecteur (1), la présence d'un événement nécessitant des mesures de protection contre les sinistres ;
une deuxième étape incluant le fait de transmettre, au moyen du détecteur (1), le signal de détection, sur la base d'un résultat de détection relatif à l'événement ; et
une troisième étape incluant le fait de relayer, au moyen du relais (R1), le signal de détection reçu en provenance du détecteur (1), dans lequel un premier relais (R11) appartient à un premier groupe de détection (G1) et un deuxième relais (R12) appartient à un deuxième groupe de détection (G2) différent du premier groupe de détection (G1) ;
la troisième étape incluant le fait de, lorsque le premier relais (R11) de la pluralité des relais (R1) reçoit le signal de détection en provenance du détecteur (1) du premier groupe de détection (G1) auquel appartient le premier relais (R11), parmi la pluralité de groupes de détection (G0), relayer, au moyen du premier relais (R11), le signal de détection au deuxième relais (R12) distinct du premier relais (R11), de la pluralité des relais (R1), et lors de la réception du signal de détection en provenance du détecteur (1) du deuxième groupe de détection (G2) auquel appartient le deuxième relais (R12), parmi la pluralité de groupes de détection (G0), relayer, au moyen du deuxième relais (R12), le signal de détection au premier relais (R11) ;
dans lequel le détecteur (1) et le relais (R1) dans chaque groupe de la pluralité de groupes de détection (G0) communiquent l'un avec l'autre par le biais d'une fréquence correspondante parmi des fréquences, les fréquences étant respectivement adoptées par la pluralité de groupes de détection (G0), et les fréquences étant mutuellement différentes ; et
les relais de la pluralité des relais (R1) communiquent entre eux par le biais d'une fréquence différente de l'une quelconque des fréquences devant être adoptées par la pluralité de groupes de détection (G0).

6. Programme comprenant des instructions pour amener le système de détection selon la revendication 1 à exécuter les étapes du procédé selon la revendication 5.
